# EUROPEAN PATENT APPLICATION

(11) **EP 2 173 077 A1**
(43) Date of publication of application: **07.04.2010**
(21) Application number: 08290939.1
(22) Date of filing: 06.10.2008
(51) Int. Cl.: H04L 29/06, H04L 29/08

(54) **Shared content addressing protocol**

(71) Applicant: Alcatel Lucent, 75008 Paris (FR)
(72) Inventor: De Schepper, Koen, 75008 Paris (FR); Verzijp, Nico, 75008 Paris (FR)
(74) Representative: Louiset, Raphael

(57) **Abstract**

A method for data caching and retrieving within a network, said network comprising at least a server (1) hosting a content (2), a client (3) requesting a data comprised in the said content and at least one network device routing and/or serving a request, said method for data caching and retrieving comprising:
- formatting a request message identifying the requested data using the network layer and the transport layer ;
- sending the said request message toward the origin server ;
- receiving the request message by the network device ;
- checking if the requested data is available in the network device cache ;
- formatting one or more response messages identifying the transported data using the network layer and the transport layer;
- sending the said response message toward the origin of the request message.

## Description

### FIELD OF THE INVENTION

This invention relates to data availability on a network. Specifically, it relates to the optimization of data retrieving through a network.

### BACKGROUND OF THE INVENTION

Network services development is spurred by ever increasing end-user demands for richer content, more bandwidth, shorter latency and increased connection reliability. To fulfill these demands, one alternative would be to use data caching scheme. Caching scheme replicates a subset of a server data at many different locations of the network in order to serve client requests without having to go back to the main server site. When requests arrive for executing operations at a cache, the cache site would attempts to satisfy the request from the locally cached data. If the required data is not present at the cache, it is retrieved from the origin site and it may be further stored at the cache for satisfying future requests. The primary benefits of caching are to make content load faster (reduce latency), to reduce wide area bandwidth usage (increase the effective bandwidth) and also to reduce the load imposed upon origin servers (increase connection reliability and QoS).

Almost all types of contents (text, file, streaming media, real-time video, radio) can be cached which may explain the extensive use of caching scheme in the mainstream contents delivery processes. As a non-limitative example, one can mention Content Distribution Network (CDN), Web Caching (HTTP/FTP) and Peer-to-Peer (P2P).

Caches include proxy caches, gateway caches, reverse caches (surrogates) and any other storage operation that directly affects the delivery of networks contents. They can be located at a number of different locations along the path between a client and an origin server, such as in the front of an origin server or near network gateways, in the aim of maximizing the number of clients that can use caches and that advantage in the wide area network.

When a client sends a message to an origin server for establishing communication, the server has to satisfy the query or uses a client redirection protocol in order to select one of the many widely distributed caches to which the client ought to be redirected , these caches maintaining information on their current load,. The client is then told to queries the selected cache to proceed with further communication and content retrieving process.

As non-limitative examples, such client-server or client-cache interactivity is administered by the Hypertext Transfer Protocol (HTTP), File Transfer Protocol (FTP) and P2P protocol, running over higher application layers.

Accordingly, the current mechanism of data retrieving and caching over the network reveals many drawbacks. As an example, it works only in one direction (big server to client) and is managed by the sources of contents. Extra equipment and configuration are required on a per case basis to support caches. In addition, it employs a driven caching scheme that requires the knowledge of caches locations, in opposition to a content location agnostic caching mechanism. Furthermore, the above mentioned scheme needs to be implemented again when a new application requires data distribution. Hence, the process is repeated as many as the number of the higher layer protocols on use. As non-exhaustive examples, dedicated content delivery methods towards HTTP differ from the one towards CDN, equally, the dedicated content delivery method towards P2P is different from the one towards FTP.

In addition, the designer of an overlay network may be faced with the following problems:
- administration complexity of a distributed system. The network manager has to deal with a set of applications running on physically remote sites;
- efficiency. Overlay network layers has a performance penalty with respect to an implementation based on code in the routers;
- information loss. This is the counterpart of virtualization. Since an overlay network runs on top of a transport protocol, the topology of the underlying content delivery network may be not easily visible.

The current data caching and retrieving methods limit the fulfillment of the end-user demands, and more generally confines the network services development.

### OBJECTS OF THE INVENTION

A first object of the present invention is to develop a content location agnostic caching scheme. In other words, the requester is not aware of the location of the content he is requesting. From his point of view the data is just requested and received from the original content provider.

A second object of the present invention is a method facilitating data caching and delivery.

A third object of the present invention is a data caching and delivery scheme independent of higher application layers and protocols.

A fourth object of the present invention is a new communication method in the transport layer.

A fifth object of the present invention is a method enabling end-user unaware of how to handle data caching.

A sixth object of the present invention is to optimize the network for caching purpose.

A seventh object of the present invention is to develop one generic content sharing and delivery mechanism able to support conjointly all the mechanisms previously supported by higher application layers.

Another object of the present invention is an intermediate network device for data caching and delivery in accordance with the present invention.

### SUMMARY OF THE INVENTION

A first aspect of the present invention relates to a method for data caching and retrieving within a network, said network comprising at least a server hosting a content , a client requesting a data comprised in the said content and at least one network device routing and/or serving a request, said method for data caching and retrieving comprising:
- formatting a request message identifying the requested data using the network layer and the transport layer ;
- sending the said request message toward the origin server ;
- receiving the request message by the network device ;
- checking if the requested data is available in the network device cache ;
- formatting one or more response messages identifying the transported data using the network layer and the transport layer;
- sending the said response message toward the origin of the request message.

Advantageously, an intermediate network device checks the availability of a requested data in its cache by inspecting the network layer and the transport layer headers.

A second aspect of the present invention relates to an intermediate network device enabling data caching and delivering within a network, said device comprising:
- means for receiving a request message from a client requesting data comprised in content, wherein the said request message is intended to a server hosting said content ,
- means for inspecting a network layer header and a transport layer header of the request message so as to identify the requested data;
- means for checking if the requested data is available in an intermediate network device cache ;
- means for formatting one or more response messages identifying the transported data using the network and the transport layer;
- means for sending the said response message toward the origin of the request message.

Advantageously, if an intermediate network device receives a request message for a content address identifier that is unavailable in its cache, it forwards the request to the origin server as a client.

### DESCRIPTION OF THE DRAWING

The feature and advantages of the invention will become more apparent from the following detailed description with reference to the attached figures and in which like reference numerals refer to similar elements and in which:
- Fig1 is a block diagram that explains the application context of the present invention;
- Fig2 shows building blocks of an intermediate network device in accordance with the present invention ;
- Fig3 is a diagram that illustrates request/response messages flow for data retrieving within a network, in accordance with the present invention;
- Fig4 illustrate a request message format, in accordance with the present invention;
- Fig5 illustrate a response message format, in accordance with the present invention.

### DETAILED DESCRIPTION OF THE PREFERRED EMBODIMENT

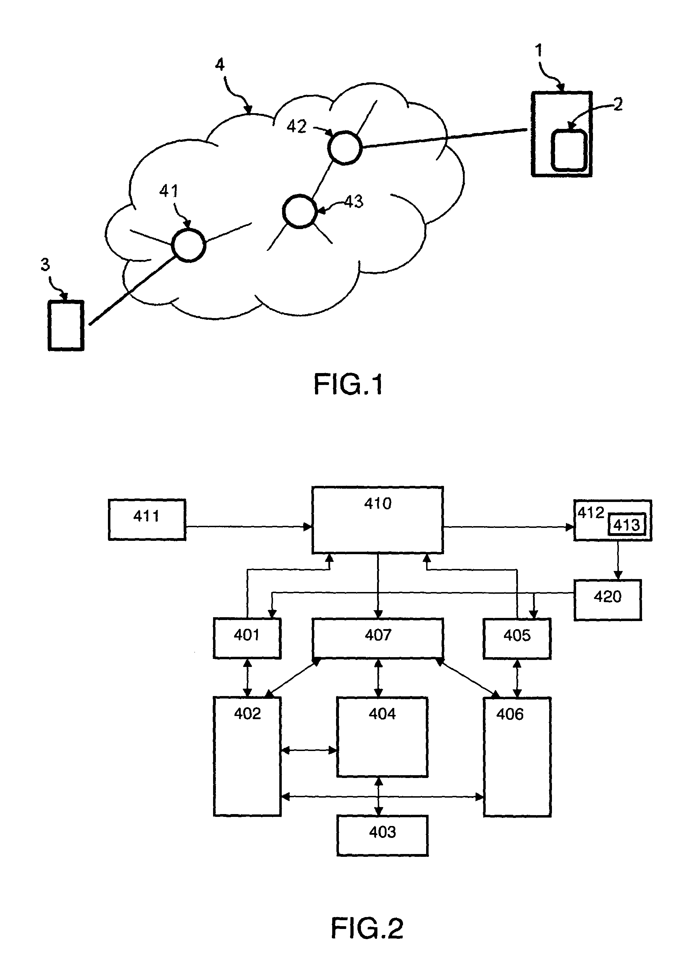

The application environment of the present invention can be introduced by referring to figure 1 which discloses:
- an origin server 1 to which is associated an IP address, further designated by S@IP, and hosting a certain content 2 available on request through the network 4 ;
- a client 3 to which is associated an IP address, further designated by C@IP, and being connected to the network 4 ;
- several intermediate network devices 41, 42, 43, within the network 4, supporting data caching, scheduling and sharing. They sit in the network path that relates the client 3 to the origin server 1. An IP address is associated to each device, further designated by R@IP. As a non-limitative example, these devices are of types of routers, bridges, servers, modems, gateways and switches.

The content 2 hosted by the origin server 1 is mapped to a virtual address space. Each byte of sharable contents is fully defined by a pointer that consists out of at least 2 parts. The first part is given by S@IP; the IP address of the hosting server. However, the second part is a content address.

The IP address can be the fourth (IPv4) or the sixth (IPv6) version of the Internet Protocol, or any other equivalent network layer protocol. The content address is any address identifier or referencing mean that identify uniquely each byte within all the content hosted by the server 1 and available on request through the network 4. Exemplary, a content address may be the rank of byte in the sequenced content. This data addressing mechanism improves shared content reusability (for caching, multicast, retransmits, scheduling).

Content may be addressed, in a first embodiment, with an absolute address fully specified with both the S@IP and the full absolute content address. In a second embodiment, the content address is defined relative to another reference pointer by a relative content address given only by an offset. In a third embodiment, the content address can be absolute, but the S@IP is used from another reference pointer.

When, the client 3 (C@IP) attempts to retrieve the content 2 hosted at the origin server 1 (S@IP), it launches a request message toward the origin server using all layers below the transport layer (L4).
1. The request message has the following format:

| | |
|---|---|
| L3: S=C@IP ; D=S@IP ; ... | L4 : Request ; i : 512 ; f : 12000 ; ... |

where L3 and L4 refer, respectively, to the third and to the fourth layer of the OSI reference model. L3 and L4 correspond, respectively to the network and transport layers. i and f are respectively the content addresses of the initial and final byte of the requested content.

The request message contains an L3 and L4 header (next to lower layer headers). The first header is the normal network layer (L3) IP header, which contains amongst others the sender and the destination IP addresses. The sender may be a client of type 3 or an intermediate network device of type 41, 42 or 43, whereas the destination is as an example the content owner such as the origin server 1. Thus, at the start, it is usually intended to direct the request message towards the origin server 1.

The second header is a transport layer (L4) header in accordance with the present invention. In the second header and in the contrary to conventional transport layer protocols such as TCP, UDP and DCCP, no ports are used, but instead an address range is specified. This address range is a unique identification of data 2 available on the origin server 1. The present header contains also a flag showing that the current message is a request, in the response the same bit position(s) has an other value to indicate the difference between request and response, and their further different header layout.

As does the existing L3 header, also the new L4 header may contain optional administrative information. As non-limitative examples, these information may contain: flags for request indication, cancel indication, round trip measurement indication, a request session id, a receive window (controlling the amount of data or the latest deadline time the requester is prepared to receive in short term), deadlines (for the first and the last byte, indicating deadlines for all the bytes via a linear mapping), requested Type of Service marking and handling for the responses, checksum, PTTL (Previous caching time to live for estimation of cache distance and delay).

The request and response messages will always contain the fully specified range it requests or caries.

On an application level, the upper bound f of the address range may be defined in an absolute manner, in a relative manner to the initial value I, or even unspecified for the following raisons:
- an expected size of the requested data;
- the content can indicate the size itself;
- a continuous data retrieving until an error occurs ;
- the requested content is assumed infinitely, typically as a life stream whose the size is constantly growing.

The application is responsible to provide an applicable content length in each request.

Optional administrative information in both headers serves for the protocol refinement and it is not required for basic operation.

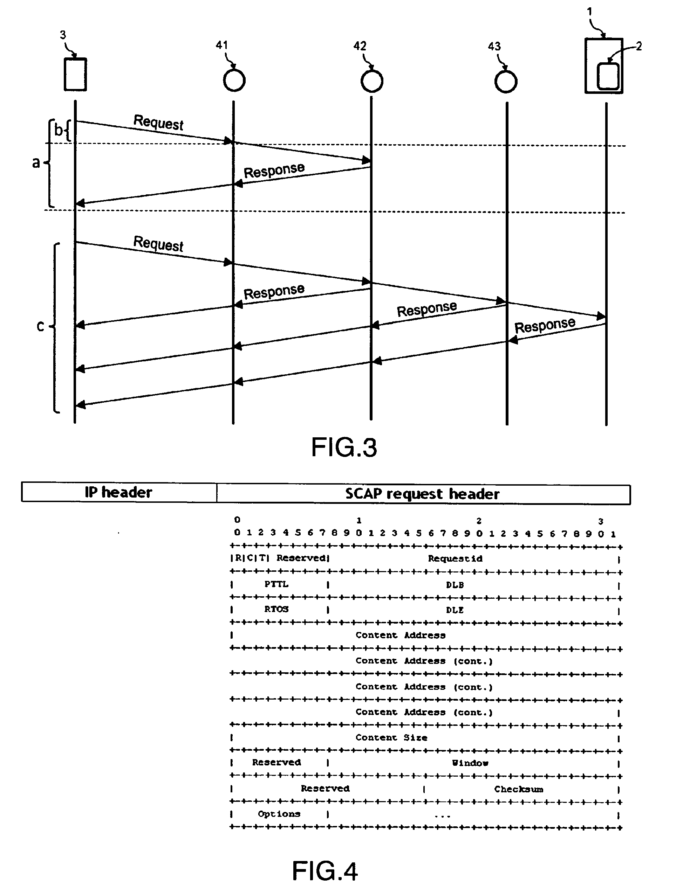

Figure 4 illustrates a more general format of a request message. It will be further detailed hereinafter.

As response to the above request message, the requester waits for a response message of the following format:

| | | |
|---|---|---|
| L3: S=S@IP ; D=C@IP ; ... | L4 : Response ; i : 512 ; f : 7500 ; ... | data |

The response message contains:
- the normal Layer 3 header composed of the sender and destination IP addresses, S@IP and C@IP, respectively. Specifically, the sender is always an origin server (S@IP). The destination may be an intermediate network device (R@IP) of type 41, 42, 43, or a client (C@IP) of type 3 ;
- L4 header is of the response layout, which indicates that the current message is a response type and specifies the content address range and optionally other fields of the content carried in this message. ;
- the third part of the message is the content data carried by this message.

Figure 4 illustrates a more general format of a response message. It will be further detailed hereinafter.

The hereinbefore detailed communication phases constitute a new protocol, further designated by Shared-Content Addressing Protocol (SCAP).

In addition to their main function such as routing, scheduling and address translation, the intermediate network devices 41 42 43 caching functionality comprises:
- maintaining and updating a copy of a subset of content 2 present at the origin server;
- managing and serving received requests;
- managing and forwarding requests to the origin server 1;
- anticipating the requested data.

A preferred embodiment of an intermediate network node, according to the present invention, is illustrated in figure 2 which comprises:
- one or more input interfaces 411 that receive all messages passing in the device ;
- one or more output interfaces 412 that send all messages going to a specific link and contains one or more queues 413 to buffer temporary overflow;
- a forwarding engine 410 that is responsible for multiplexing messages that it receives to their destination;
- a response scheduler 401 that is responsible for scheduling the responses to be send to their requestors;
- an incoming request list 402 that keeps track of all incoming requests that need to be fulfilled, and keeps a reference to the data in the cache if it is present;
- a cache manager 403 that manages the cache 404. The cache 404 keeps cached data with reference counts of future scheduled responses in the incoming request list and with metrics about recent usage patterns;
- a request scheduler 405 that manages the outgoing requests list 406 to be addressed to the origin server 1;
- a coordinator module 407 responsible for coordinating the processing of incoming messages between incoming request list 402, the cache 404 and the outgoing request list 406;
- a queue monitor 420 that provides feedback to the schedulers 401 and 405 about the queue 413 filling sizes in the output interfaces 412;

The response scheduler 401 is responsible for sending the responses to the remote requestor clients 3 (via the forwarding engine). It is the one composing the response messages and offering them to the forwarding engine 410. It is also responsible to choose when responses are best send according to time-variant information (deadlines, timers) and the occupation of network links (queue filling sizes) relative to requestor clients.

The request scheduler 405 is responsible for sending requests for content that is not cached to the origin server 1 (via the forwarding engine). It is the one composing the request messages and delivering them to the forwarding engine 410. It is also responsible to choose when requests are best send according to time-variant information (deadlines, timers) and the occupation of network links (queue filling sizes) relative to origin servers.

The queue monitor 420 monitors the different queues in the system and reports this to the schedulers 401 and 405.. These schedulers organize messages according to predetermined criteria such as PTTL, importance, urgency, status, content type, network link occupation.

The incoming request list 401 contains all incoming requests that are received from requestors and are scheduled as a response when the data becomes available in the cache 404. Each incoming request has a reference to either the data in the cache or to an outgoing request that waits to be fulfilled in the outgoing request list 406. Hence, the outgoing request list 406 groups all pending requests that are missing in the cache.

The cache manger 403 is able to apply all the relevant cache policy mechanisms such as:
- determining which of the older entries in the cache to discard in order to make free space for new entries;
- reorganizing memory to best fit the data;
- initiating a cache revocation if it is required;

The origin server 1 may manage response messages that it has to transmit in the same manner as an intermediate network node does.

The client 3 may manage requests and responses in the same manner as an intermediate node with respect to caching and sharing of content between different applications on the client.

The coordinator module 407 will receive all incoming SCAP messages and is responsible to coordinate the updates in 402, 404 and 406.

If an intermediate node 41, 42 or 43, receives a content request message, its coordinator module will bank it in the incoming request list 402. Then it checks if the requested data is present in the cache 404. Upon the check test, and with reference to figure 3, one of the following tasks may take place:
- case a : if the requested data is fully available, then the requested content attached to the request. The response scheduler will deliver and discard the request from the incoming request list 402;
- case b: if the requested data is entirely unavailable at this intermediate network device, the coordinator module 407 will check if a request is already present in the outgoing request list 406, and if not store the request in the outgoing request list 406. The request scheduler 405 will create a new request message as a client toward the origin server 1. The origin server response is again received by the coordinator module, which will remove the satisfied request from the outgoing request list 406, will offer the data to the cache 404 and attach the cached data to the first request message. The response scheduler can send the response for the satisfied original request when applicable;
- case c: if the content is partially available in the cache, then the available data is scheduled towards the requester, and new request messages are engendered towards the content owner to request the missing content in the same manner as in the previous case.

If the requested data is unavailable, the intermediate node may check if the data is already recurrently requested. If it is the case, the intermediate network node may store, in its cache, a copy of the response to the forwarded request, in order to satisfy future requests.

The request and response messages concern generally a range of the content. Also, a requested range is generally served sub-range by sub-range until the request is completely satisfied.

The basic unit of SCAP communication is the message. A client transmits a request message to an origin server. In response to the request message, the client receives from the origin server or from an intermediate network device, a response message. A SCAP message is comprised of a header and a message body. Message body content contains a chunk or the totality of the requested data.

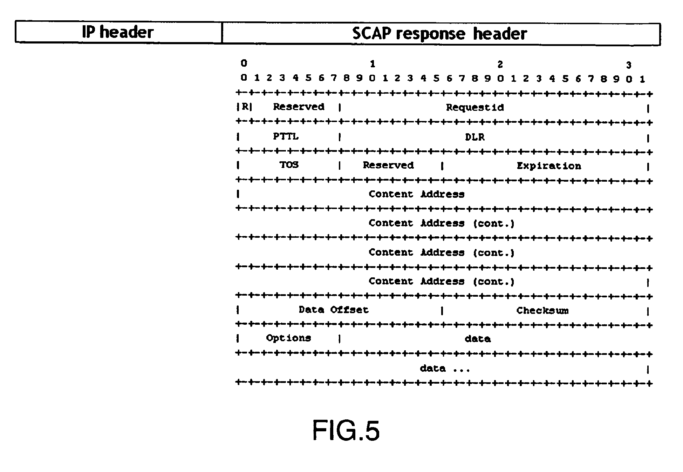

Figure 4 and 5 depict, respectively, the general format of a SCAP response and request message header. The SCAP response message header contains content address fields and administrative information. Administrative information contains different fields of information, namely, time-invariant, time-variant, node number-dependant and constant fields.

Variant information contained in a message header are updated on the traverse of each node. If one of the time-variant information bounds is reached, such as the deadlines are null, the status of the message will be changed.

A SCAP response header, preferably, comprises a checksum, PTTL (previous cache time to live), flags (1: request, 0: response), DLR (deadline response time), data offset. Those skilled in the art recognize that segments may be added or removed for more reliable or connectionless transport.

Reporting error indicators can be handled by reusing existing or defining new dedicated ICMP (Internet Control Message Protocol) errors. Alternatively the SCAP protocol can as well define flags to report errors.

An intermediate network node that does not support the SCAP protocol passively routes the request to its destination IP address (owner and source of the requested content).

The interaction between an intermediate node supporting SCAP and the origin server 1 for missing data retrieving is carried out in the same manner as the interaction between the client 3 and the origin server 1.

If an intermediate network node that supports caching via SCAP/IP is receiving a content response, it can check if any requests are pending for this content. If it is the case, the content in the response will be scheduled, based on the deadlines contained in the message header. It can also decide if it wants to cache the data for later references. This mechanism is repeated for every SCAP/IP supporting intermediate network node.

SCAP allows intermediate network devices to interpret the transport layer. They check the availability of a requested data in their cache by inspecting only the layer 3 and layer 4 headers.

Using deadlines and scheduling are one way of implementing SCAP. Other alternatives are possible without deadlines, like the TCP congestion control, or other mechanisms. As a non-limitative example, policies for deadline problems can be defined as follows:
- requests that are not schedulable due to deadline constraints are replied with an error response;
- requests having deadline constraints are treated in priority
- requests having short deadline are skipped.

SCAP can be used for all type of contents (video, image, html, files.) caching and retrieving. SCAP is independent of the traversed IP network type (LAN, WAN).

The SCAP response and request headers may be configured in a manner offering speed and low overhead. Equally it can be configured for a reliable communication using acknowledgment, error prediction.

SCAP preferably support congestion control, priority handling, receiver window, content acknowledgment, content push, expiration of content, policy enforcement, cancel of pending requests, cache revocation.

For optimization purposes the granularity of the SCAP addressable content can be higher than 1 byte, such that caching and transport is manipulating fixed length blocks of data.

A client application interface towards the SCAP stack can have, as non- limitative examples, one of the following embodiments:
- a blocking or non-blocking read only pipe interface to read bytes from. The pipe is initialised with the server IP address, the start content address and an optional end content address. If scheduling is provided in the protocol, then also an expected read rate and/or begin and/or end times can be provided ;
- a read-only memory mapped address space interface to read bytes from. The memory mapping is initialised with the server IP address, the start content address and an end content address (or content size). This API (Application Programming Interface) allows random access, and assumes that an underlying local cache optimisation algorithm is provided. If scheduling is provided in the protocol, then also a timeout value can be provided to trigger an exception in case the accessed memory is not available in time;
- a raw request handler interface with callbacks and modifiable deadlines. The application can setup a request handler which represents one request session, and the application can re-initialise the handler with different content addresses and deadlines (if available).

A server application interface towards the SCAP stack can have, as non-limitative examples, one of the following embodiments:
- an interface to map a file on the server file system to the SCAP address space. Optionally the start address can be provided, otherwise it is automatically assigned and returned as a result of the initialisation;
- a write only pipe interface to write bytes to. The pipe is initialised with an optional start content address, an optional end content address, an optional average rate, and optional start time, an optional end time. The time related parameters are present if scheduling is supported in the protocol;
- a raw response handler interface with callbacks which are called when data is requested from the network. The application must setup a response handler to serve a range of data.

The following example illustrates a request/response messages flow including two clients (C1@IP and C2@IP), a SCAP router (R@IP) and an origin server (S@IP) that hosts a shared content. The content address range spreads from 5200 to 15000.

The request messages transmitted from both clients can take, as a simplifying but non-limitative example, the following format:

| |
|---|
| S=C1@IP ; D=S@IP ; 1 ; i=5200 ; f: 12500 ; ds=5s ; de=50s |
| |
| S=C2@IP ; D=S@IP ; 1 ; i=5200 ; f: 12500 ; ds=10s ; de=60s |

ds and de refer, respectively, to the deadline of the first and the last byte of the requested data range. Obviously, additional administrative information may be added to the request messages.

Both request messages will be received by the input interface 411, transferred to the coordinator module 407 and then stored in the incoming request list 402. Request messages are organized according to their time of arrival and information contained in the request header (priority, importance, the requester, the requested data, the type of the requested data such as streaming, text or a real-time application).

The coordinator module checks if the requested data is present in the cache 404 so as to serve these requests. Supposing that the data range 10000-12500 is unavailable in the SCAP router cache 404. The coordinator module 407 will attach the available data to the requests in the incoming request list, and inserts a new request in the outgoing request list for the missing data. The response scheduler 401 formats response messages to be addressed to C1@IP and C2@IP and the request scheduler 405 formats a new request message to be forwarded to the origin server S@IP.

The SCAP router response may be formatted in many response messages in the following way:

| |
|---|
| S=R@IP ; D=C1@IP ; 0 ; i=5200 ; f: 6499 ; dr=1s |
| ■ ■ ■ |
| S=R@IP ; D=C1@IP ; 0 ; i= 7800; f: 9099 ; dr=1s |
| |
| S=R@IP ; D=C1@IP ; 0 ; i=9100 ; f: 9999 ; dr=1s |

The SCAP router addresses response messages to C2@IP in the same manner as for C1@IP.

The new formatted request is sent by the request scheduler 405, and then routed toward the origin server through the forwarding engine 410 and an output interface 412. The request may have the following format:

| |
|---|
| S=R@IP ; D=S@IP ; i=10000 ; f: 12500 ; ds=5s ; de=48s |

When the SCAP router receives response messages from the origin server, it can keep a copy of the server responses contents in its cache 404 for future requests. Using the received content from the origin server, the SCAP router formats and transmits responses messages towards C1@IP and C2@IP in order to meet the initially received requests.

At the sender side, the Transport layer protocol is typically responsible for encapsulating application data into packets suitable for transfer over the network towards a destination. At the destination side, the Transport Layer protocol performs the reverse operation, by removing the encapsulation and providing the data to the application again. Besides this basic function, a transport layer protocol can provide optionally many more functions, like connection oriented communication, session support to address multiple application entities in the same location, reordering packets that were received in the wrong order, abstraction of the packet concept by providing a stream of bytes concept, reliability by acknowledgement of received packets and retransmission of lost or corrupted packets, flow control to avoid flooding of the receiver, congestion avoidance to avoid flooding of the network, etc...

The SCAP transport protocol includes data identification (addressing) provided by the application, in the transport encapsulation header, such that the data is identifiable for reuse by intermediate data caching and sharing devices. As a result, any intermediate network device that is capable of processing the transport encapsulation is able to support autonomous caching and sharing of the data without requiring other application knowledge.

The TCP transport protocol is a connection-oriented, reliable, byte oriented transport protocol with flow control and congestion avoidance. This protocol cannot be used for multicast, or broadcast, mainly due to its bidirectional dialogues used for the connection-orientated setup and its reliability support. UDP is a simple transport protocol to transport datagrams without connections and without reliability, and which can be multicast or broadcast to multiple destinations. It is possible to define the SCAP protocol with the typical transport functions, like reliability (retransmit from the nearest cached intermediate network device), flow control, congestion avoidance, packet reordering, packet abstraction, etc... There is no need to support connection setup and end-to-end sessions. Especially, avoiding separation of application sessions makes it possible to share as much as possible data. Additionally, request scheduling is possible when delivery timing requirements are provided by the application and included in the protocol encapsulation header.

## Claims

1. A method for data caching and retrieving within a network, said network comprising at least a server (1) hosting a content (2), a client (3) requesting a data comprised in the said content and at least one network device routing and/or serving a request, said method for data caching and retrieving comprising:
- formatting a request message identifying the requested data using the network layer and the transport layer ;
- sending the said request message toward the origin server ;
- receiving the request message by the network device ;
- checking if the requested data is available in the network device cache ;
- formatting one or more response messages identifying the transported data using the network layer and the transport layer;
- sending the said response message toward the origin of the request message.

2. Method in accordance with claim 1, **characterized in that** the at least one network device includes an intermediate network device, said method comprising:
- receiving the request message by the intermediate network device ;
- checking if the requested data is available in the intermediate network device cache.

3. Method in accordance with claim 1 or 2, **characterized in that** the pointer used to address the requested data comprised in the said content (2) comprises a content address identifier and the IP address of the server (1) having the master copy of said requested data.

4. Method in accordance with any of claims 1 to 3, **characterized in that** the request message comprises the IP address of the server (1), the IP address of the client (3) requesting said data, constant and time-variant administrative information and an address identifier of the requested data.

5. Method in accordance with claim 1, **characterized in that** the response message comprises the IP address of the client (3) requesting said data, the IP address of the server (1), constant and time-variant administrative information and part of the requested data with its address identifier.

6. Method in accordance with any of claims 1 to 5, **characterized in that** the intermediate network device check the availability of the requested data in its cache by inspecting the network layer and the transport layer headers.

7. Method in accordance with claim 6, **characterized in that** if an intermediate network device receives a request message for a content address identifier that is unavailable in its cache, the said intermediate network device forwards the said request to the origin server as a client.

8. Method in accordance with claim 1, **characterized in that** the scheduling of request and response messages takes into consideration time-variant and constant administrative information incorporated in the message header.

9. Method in accordance with any of claim 1 to 8, **characterized in that** comprises :
- requesting data within the said network using only the primary fourth layers of the OSI reference model;
- responding to the said request using only the primary fourth layers of the OSI reference model ;
- identifying data available on request through the network via the transport layer.

10. Method in accordance with any of claims 1 to 9, **characterized in that** the transport layer contains information related to the transported or requested data, said information comprises:
- message type indication;
- an address identifier of the requested or transported data.

11. Method in accordance with claim 1, **characterized in that** the network device receiving the request message is the server.

12. An intermediate network device enabling data caching and delivering within a network, said device comprising:
- means for receiving a request message from a client (3) requesting data comprised in a content (2), wherein the said request message is intended to a server (1) hosting said content (2),
- means for inspecting a network layer header and a transport layer header of the request message so as to identify the requested data;
- means for checking if the requested data is available in an intermediate network device cache ;
- means for formatting one or more response messages identifying the transported data using the network and the transport layer;
- means for sending the said response message toward the origin of the request message.

13. Intermediate network device in accordance with claim 12, **characterized in that** if a requested data is unavailable in said intermediate network device cache, it is able to transmit a request message as a client identifying the requested data using the network layer and the transport layer.

## Amended claims

### Amended claims in accordance with Rule 137(2) EPC.

**1.** A method for data caching and retrieving within a network, said network comprising at least a serves (1) hosting a content (2), a client (3) requesting a data comprised in the said content and at least one network device routing and/or serving a request, said method for data caching and retrieving comprising:
- formatting a request message identifying the requested data using the network layer and the transport layer
- sending the said request message toward the origin server
- receiving the request message by the network device
- checking if the requested data is available in the network device cache
- formatting one or more response messages identifying the transported data using the network layer and the transport layer
- sending the said response message toward the origin of the request message
wherein the requested data is specified in a network layer header and a transport layer header of the request message and the transported data is specified in a network layer header and a transport layer header of the response message.

**2.** Method in accordance with claim 1, **characterized in that** the at least one network device includes an intermediate network device, said method comprising:
- receiving the request message by the intermediate network device ;
- checking if the requested data is available in the intermediate network device cache.

**3.** Method in accordance with claim 1 or 2, **characterized in that** the pointer used to address the requested data comprised in the said content (2) comprises a content address identifier and the IP address of the server (1) having the master copy of said requested data.

**4.** Method in accordance with any of claims 1 to 3, **characterized in that** the request message comprises the IP address of the server (1), the IP address of the client (3) requesting said data, constant and time-variant administrative information and an address identifier of the requested data.

**5.** Method in accordance with claim 1, **characterized in that** the response message comprises the IP address of the client (3) requesting said data, the IP address of the server (1), constant and time-variant administrative information and part of the requested data with its address identifier.

**6.** Method in accordance with any of claims 1 to 5, **characterized in that** the intermediate network device check the availability of the requested data in its cache by inspecting the network layer and the transport layer headers.

**7.** Method in accordance with claim 6, **characterized in that** if an intermediate network device receives a request message for a content address identifier that is unavailable in its cache, the said intermediate network device forwards the said request to the origin server as a client.

**8.** Method in accordance with claim 1, **characterized in that** the scheduling of request and response messages takes into consideration time-variant and constant administrative information incorporated in the message header.

**9.** Method in accordance with any of claim 1 to 8, **characterized in that** comprises :
- requesting data within the said network using only the primary fourth layers of the OSI reference model;
- responding to the said request using only the primary fourth layers of the OSI reference model ;
- identifying data available on request through the network via the transport layer.

**10.** Method in accordance with any of claims 1 to 9, **characterized in that** the transport layer contains information related to the transported or requested data, said information comprises:
- message type indication;
- an address identifier of the requested or transported data.

**11.** Method in accordance with claim 1, **characterized in that** the network device receiving the request message is the server.

**12.** An intermediate network device enabling data caching and delivering within a network, said device comprising:
- means for receiving a request message from a client (3) requesting data comprised in a content (2), wherein the said request message is intended to a server (1) hosting said content (2),
- means for inspecting a network layer header and a transport layer header of the request message so as to identify the requested data;
- means for checking if the requested data is available in an intermediate network device cache ;
- means for formatting one or more response messages identifying the transported data using the network and the transport layer;
- means for sending the said response message toward the origin of the request message.

**13.** Intermediate network device in accordance with claim 12, **characterized in that** if a requested data is unavailable in said intermediate network device cache, it is able to transmit a request message as a client identifying the requested data using the network layer and the transport layer.
